# EUROPÄISCHE PATENTSCHRIFT

(11) **EP 0 688 700 B1**
(45) Veröffentlichungstag und Bekanntmachung des Hinweises auf die Patenterteilung: **16.07.1997**
(21) Anmeldenummer: 95107016.8
(22) Anmeldetag: 09.05.1995
(51) Int. Cl.: B60R 21/20

(54) **Instrumententafel**
Dashboard
Planche de bord

(30) Priorität: 22.06.1994 DE 4421820
(43) Veröffentlichungstag der Anmeldung: 27.12.1995
(73) Patentinhaber: Deutsche Fibrit Gesellschaft Ebers & Dr. Müller mbH, 47929 Grefrath (DE)
(72) Erfinder: Berg, Matthias, D-47906 Kempen (DE); Harnisch, Hartmut, D-47929 Grefrath (DE); Madge, Steven, D-47802 Krefeld (DE); Reinhardt, Werner, D-65428 Rüsselsheim (DE)
(74) Vertreter: Cohausz & Florack

(56) Entgegenhaltungen:
- EP-A- 0 364 714
- DE-A- 3 611 486
- DE-A- 4 220 704
- US-A- 5 282 647

## Beschreibung

Die Erfindung betrifft eine Instrumententafel für Kraftfahrzeuge nach dem Oberbegriff des Anspruchs 1, mit einem auf der Beifahrerseite vorgesehenen Ausschnitt, in dem eine Klappe paßgenau eingesetzt ist, der scharnierartig gehalten ist und eine für den Durchtritt eines Airbags ausreichende Größe hat, mit einer unter dem Träger der Instrumententafel angeordneten Verstärkungshalbschale und einem Schußkanal für den Airbag.

Eine solche Instrumententafel besteht in der Regel aus einem folienkaschierten Träger. Das Kaschierungsmaterial kann Kunststoff oder Leder sein. Als Material für den Träger verwendet man entweder Kunststoff oder defibrierte Holzfasern, gegebenenfalls mit Kunststoff versetzt. Ferner umfaßt sie eine unter dem Träger angeordnete und mit diesem verbundene Verstärkungshalbschale, in der auch der Belüftungskanal ausgeformt sein kann.

Bislang hat man im Träger der Instrumententafel eine Ausnehmung für den Durchtritt des Airbag bei einem Zusammenstoß zum Schutze des Beifahrers in einem Kraftfahrzeug vorgesehen. Diese Ausnehmung wurde durch eine Klappe verschlossen, die über ein Scharnier am Träger der Instrumententafel am Rand der Ausnehmung befestigt war. Die Klappe wurde durch die Kaschierung der Instrumententafel mit einer schaumstoffbeschichteten Kunststoffolie überdeckt. Diese bekannte Lösung hatte den Nachteil, daß die Klappe als zusätzliches Teil gefertigt und montiert werden mußte. Das war arbeitsaufwendig und kosten- und gewichtsintensiv.

Um diesen Nachteil zu beheben, ist die Klappe auch schon als integraler Bestandteil des Trägers der Instrumententafel gefertigt worden. Allerdings gelang dies bisher nur bei einer Ausführung, die mit einer Schaumstoffschicht unter der Folie versehen war.

Nach einem neueren Vorschlag soll die die Klappe auf einem Teil ihres Umfangs vom Träger trennende Fuge schmaler sein als 0,8 mm, und die Folie soll im Bereich der Fuge geschwächt sein. Hierdurch wird es möglich, die Fuge zwischen der Ausnehmung im Träger und in der Klappe durch die Kaschierung glatt überdecken zu können.

Ferner wird als separates Bauteil der Schußkanal für den Airbag unter der Instrumententafel im Bereich unterhalb der erwähnten Klappe montiert. Zusätzliche versteifende, meist aus Metall bestehende Profile für den Schußkanal sind unter der Instrumententafel ebenfalls angeschraubt. Fertigung und Montage des Schußkanals für den Airbag sind aufwendig.

Der Erfindung liegt die Aufgabe zugrunde, eine einfachere, preisgünstigere, gewichtsreduzierte und bei der Montage weniger arbeitsaufwendige Ausführung des Schußkanals für den Airbag zu schaffen.

Zur Lösung dieser Aufgabe wird bei der gattungsgemäßen Instrumententafel vorgeschlagen, daß der Schußkanal in der Verstärkungshalbschale ausgeformt ist, die eine Schulter zur Abstützung der Klappe und einen stabilitätserhöhenden gekröpften Kragen an der Durchtrittsöffnung für den Airbag bildet. Der Schußkanal wird nicht wie bisher aus schwerem Metallblech gefertigt, sondern aus demselben leichteren Material, Kunststoff oder defibrierte Holzfasern, wie die Verstärkungshalbschale. Dadurch ergibt sich die bevorzugte Möglichkeit des Fügens und Verbindens, z.B. Verklebens, des Bauteils mit dem Träger der Instrumententafel.

Der stabilitätserhöhende gekröpfte Kragen an der Durchtrittsöffnung für den Airbag im Schußkanal kann nach innen oder außen abgekröpft sein.

Die Wandstärke des Schußkanals kann gleich groß sein, wie die der Verstärkungshalbschale. Eine Verstärkung kann jedoch u.U. erforderlich sein. Dann besteht die Möglichkeit der Materialverdickung im besonders beanspruchten Bereich oder die Verstärkung durch eine eingelegte oder umgelegte Manschette, insbesonders aus reißfestem Material, wie Gewebe.

Die erfindungsgemäße Lösung bietet folgende Vorteile:
- Durch das integrale Anformen des Schußkanals an die Verstärkungshalbschale entfällt die separate Fertigung und Handhabung des Schußkanals;
- die Montage der Verstärkungshalbschale mit integralem Schußkanal unter der Instrumententafel wird erheblich vereinfacht und beschleunigt;
- durch den Fortfall der Metallverstärkung und Verwendung leichteren Materials wird im Kraftfahrzeug Gewicht eingespart;
- die bisher auftretenden Probleme bei der Montage des Schußkanals entfallen;
- der Schußkanal ist mit der Instrumententafel zusammen recyclebar, es entfällt also die sonst notwendig gewesene Demontage zur Trennung der Metallteile von den Nichtmetallteilen bei der Entsorgung;
- die Gefahr einer Beschädigung des Luftsacks beim Auslösen des Airbags wird verringert, weil die bisher separat befestigten Metallteile entfallen;
- es entfällt die Gefahr der Verletzung an scharfkantigen Metallteilen bei der Montage.

In der Zeichnung ist ein Ausführungsbeispiel dargestellt.

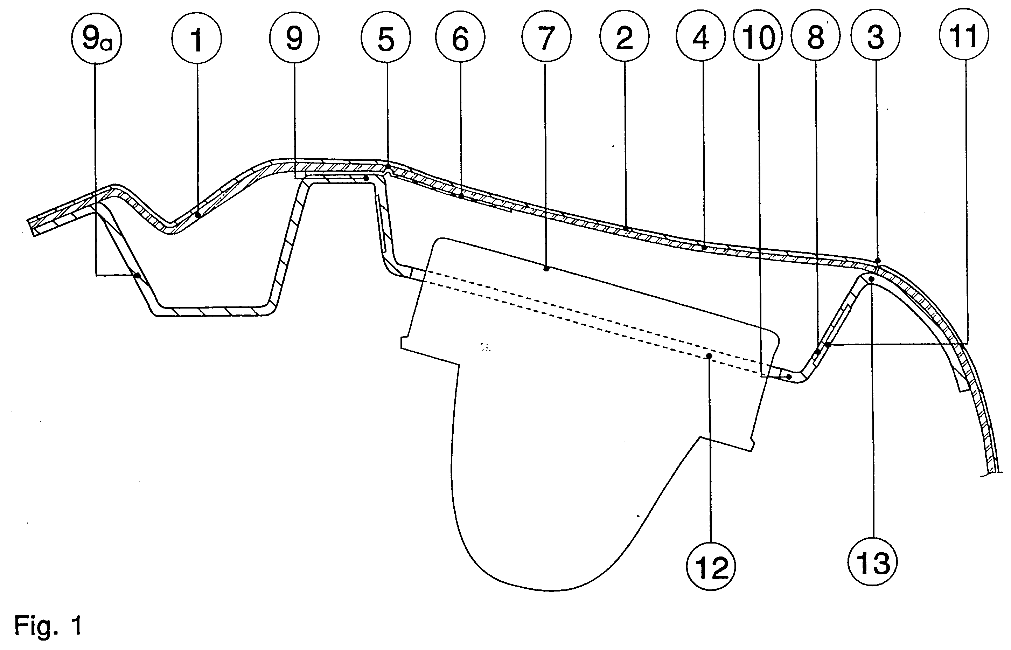

Fig. 1 zeigt einen Querschnitt der Instrumententafel.

Die Instrumententafel besteht aus dem Träger 1, der auf der oberen Sichtseite mit einer Folie 2 kaschiert ist. Im Träger 1 ist eine Ausnehmung 3 gebildet, in die eine Klappe 4 eingepaßt ist. Bei 5 ist die Klappe 4 am Träger 1 scharnierartig befestigt. Das Scharnier kann durch einen unterhalb des Trägers 1 befestigten Gewebestreifen 6 gebildet werden. Die Folie 2 überdeckt auch die Klappe 4. Beim Auslösen des unter der Instrumententafel angeordneten Airbags 7 öffnet sich die Klappe 4 und läßt den Airbag durch die Ausnehmung 3 im Träger 1 zum Schutz des Beifahrers austreten. Dabei zerreißt die Folie 2 im Bereich der Fuge zwischen der Klappe 4 und dem Rand der Ausnehmung 3.

Zur Führung des Airbags 7 ist unter der Instrumententafel ein Schußkanal 8 vorgesehen. Dieser hat leicht konische Form und ist einstückig mit der unter der Instrumententafel angeordneten Verstärkungshalbschale 9, die mit dem Belüftungskanal 9a einstückig ausgebildet ist. Die Form des den Schußkanal 8 und die Verstärkungshalbschale 9 bildenden Bauteils ist der Form der Instrumententafel so angepaßt, daß ein Fügen und Verbinden, z.B. durch Verkleben des Bauteils mit der Instrumententafel, einfach erfolgen kann.

Der Schußkanal 8 bildet eine Schulter 13, auf der sich die Klappe 4 mit ihrem Rand abstützt. Zur Stabilitätserhöhung ist ein gekröpfter Kragen 10 an der Durchtrittsöffnung 12 am inneren Ende des Schußkanals 8 vorgesehen. Der Kragen 10 ist in Fig. 1 nach innen abgekröpft. Es ist jedoch auch möglich, ihn nach außen abzukröpfen.

Eine zusätzliche Stabilitätserhöhung des Schußkanals 8 kann durch einen Ring 11 aus reißfestem Material erreicht werden, der als versteifende Manschette um den Schußkanal 8 herum in diesem eingepreßt ist. Statt dessen könnte der Ring 11 auch auf den Schußkanal 8 geklebt sein.

## Patentansprüche

1. Instrumententafel mit einem auf der Beifahrerseite vorgesehenen Ausschnitt (3), in dem eine Klappe (4) paßgenau eingesetzt ist, die scharnierartig gehalten ist und eine für den Durchtritt eines Airbags (7) ausreichende Größe hat, mit einer unter einem Träger der Instrumententafel angeordneten Verstärkungshalbschale (9) und einem Schußkanal (8) für den Airbag,
**dadurch gekennzeichnet**, daß der Schußkanal (8) in der Verstärkungshalbschale (9) ausgeformt ist, die eine Schulter (13) zur Abstützung der Klappe (4) und einen stabilitätserhöhenden gekröpften Kragen (10) an der Durchtrittsöffnung (12) für den Airbag (7) bildet.

2. Instrumententafel nach Anspruch 1,
**dadurch gekennzeichnet**, daß die Verstärkungshalbschale (9) mit dem Schußkanal (8) unter den Träger (1) der Instrumententafel gefügt und mit dieser, z.B. durch Kleben, verbunden ist.

## Claims

1. A dashboard having a cutaway portion (3) which is provided on the co-driver's side and in which a flap (4) is inserted with an accurate fit and retained after the fashion of a hinge and is large enough for the emergence of an airbag (7), a reinforcing half-shell and a discharge channel for the airbag being provided below a dashboard support, characterized in that the discharge channel (8) is formed in the reinforcing half-shell (9), which forms a shoulder (13) for supporting the flap (4) and a stability-enhancing bent collar (10) at the passage opening (12) for the airbag (7).

2. A dashboard according to claim 1, characterized in that the reinforcing half-shell (9) with the discharge channel (8) is joined under the support (4) of the dashboard and connected thereto, for example, by gluing.

## Revendications

1. Planche de bord comprenant une découpure (3) prévue sur le côté passager dans laquelle est insérée sans jeu un volet (4) qui est maintenu à la façon d'une charnière et possède une taille suffisante pour le passage d'un coussin gonflable (7), une demicoquille (9) de renforcement agencée en-dessous d'un support de la planche de bord et un canal (8) de tir pour le coussin gonflable, caractérisée en ce que le canal (8) de tir est réalisé par moulage dans la demicoquille (9) de renforcement qui forme un épaulement (13) pour le support du volet (4) et qui forme un collet (10) contre-coudé et augmentant la stabilité qui est situé à l'ouverture de passage (12) pour le coussin gonflable (7).

2. Planche de bord selon la revendication 1, caractérisée en ce que la demi-coquille (9) de renforcement est assemblée en-dessous du support (1) de la planche de bord et est reliée à celle-ci par exemple par collage.
